# EUROPÄISCHE PATENTSCHRIFT

(11) **EP 2 299 439 B1**
(45) Veröffentlichungstag und Bekanntmachung des Hinweises auf die Patenterteilung: **11.11.2015**
(21) Anmeldenummer: 10010089.0
(22) Anmeldetag: 21.09.2010
(51) Int. Cl.: B23B 31/02, B23B 31/117

(54) **Schrumpffutter**
Shrink fit chuck
Mandrin de frettage

(30) Priorität: 22.09.2009 DE 102009042502
(43) Veröffentlichungstag der Anmeldung: 23.03.2011
(73) Patentinhaber: Gühring OHG, 72458 Albstadt (DE)
(72) Erfinder: Aygün, Hakki, 72505 Krauchenwies/ Göggingen (DE)
(74) Vertreter: Meitinger, Thomas Heinz

(56) Entgegenhaltungen:
- EP-A1- 0 263 982
- EP-A1- 1 084 782
- WO-A1-2008/111225
- WO-A2-2007/042104
- JP-A- 2003 089 020
- US-A1- 2002 071 728
- US-A1- 2009 155 010

## Beschreibung

### GEBIET DER ERFINDUNG

Die vorliegende Erfindung betrifft ein Schrumpffutter gemäß dem Oberbegriff des Anspruchs 1 zum Spannen eines Werkzeugs im Schrumpfsitz. Ein solches Schrumpffutter ist aus EP 1 084 782 A1 bekannt.

### HINTERGRUND DER ERFINDUNG

Im Stand der Technik sind Schrumpffutter bekannt, die durch eine Spulenanordnung erwärmt werden können, wodurch sich eine Werkzeugaufnahme des Schrumpffutters aufweitet. Im erwärmten Zustand können Werkzeuge, wie z.B. Bohrer, Fräser oder Reibahle in die Werkzeugaufnahme eingebracht werden. Durch die Abkühlung des Schrumpffutters zieht sich die Werkzeugaufnahme des Schrumpffutters wieder zusammen, wodurch das Werkzeug gespannt wird.

Die EP 1 084 782 A1 betrifft ein Schrumpffutter mit einem klemmend in der gegenüber dem Durchmesser des Werkzeugschafts kleiner dimensionierten Werkzeugaufnahme des Futterkörpers gehalterten Werkzeug, das durch einseitiges Erwärmen des Futterkörpers einsetzbar respektive herausnehmbar ist, wobei in dem die Werkzeugaufnahme umgebenden Bereich des Futterkörpers eine Zwischenschicht aus thermisch isolierendem Material zur Verringerung des Wärmeübergangs zum Werkzeugschaft vorgesehen ist.

Die JP 2003 089020 A betrifft ein Schrumpffutter für einen Werkzeughalter aus einem Material mit einem E-Modul zwischen 200 GPa und 250 GPa und einem thermischen Expansionskoeffizienten von 14 bis 18x10⁻⁶ / °C

Die WO 2008/111225 A1 betrifft ein Schrumpffutter das ohne Einschränkungen der Stärke des Werkzeughalters einen festen Halt des Werkzeuges ermöglicht.

Die WO 2007/042104 A2 betrifft eine Vorrichtung zum lösbaren Spannen eines Werkzeugs an einer drehbaren Spindelwelle einer Werkzeugmaschine, wobei die Spindelwelle an ihrem Ende rohrförmig ausgebildet ist und wobei im Bereich des rotierenden Endes der Spindelwelle eine Induktionsheizung vorgesehen ist.

Die US 2009 /155010 A1 betrifft einen Werkzeughalter und eine drehende Spindel, mit einem Dämpfungselement das an einer äußeren Oberfläche der Werkzeughalters oder der Spindel oder zwischen dem Werkzeughalter und der Spindel angeordnet ist, um bei der Nutzung des Werkzeughalters mit Werkzeug auftretende Schwingungen zu dämpfen.

Die US 2002/071728 A1 betrifft einen Werkzeughalter mit zwei separaten Zuständen, einem ersten Zustand, in dem das Werkzeug in einem festen Presssitz im Halter gehalten wird, um es mit hoher Geschwindigkeit zu drehen und ein Werkstück zu bearbeiten, und einem zweiten Zustand, in dem das Werkzeug soweit aus dem Presssitz freigegeben wird, dass es schnell aus dem Halter entnommen werden kann.

### ZUSAMMENFASSUNG DER ERFINDUNG

Ein Vorteil eines Schrumpffutters ist seine sehr hohe Rundlaufkonstanz. Diese erlaubt hohe Rotationsgeschwindigkeiten bei der Bearbeitung eines Werkstücks.

Die Erwärmung und Abkühlung des Schrumpffutters kann allerdings zu einem sich verziehen des Schrumpffutters führen, wodurch die Rundlaufkonstanz beeinträchtigt werden kann.

Es kann daher als eine Aufgabe der vorliegenden Erfindung betrachtet werden, trotz der notwendigen Erwärmungs- und Abkühlungsvorgänge beim Einsetzen bzw. Entnehmen eines Werkzeugs eine hohe Rundlaufkonstanz des Schrumpffutters sicher zu stellen.

Diese Aufgabe wird im unabhängigen Anspruch 1 gelöst. Weitere vorteilhafte Ausgestaltungen der Erfindung ergeben sich aus den Unteransprüchen.

Wie beansprucht, wird ein Schrumpffutter zum Spannen eines Werkzeugs im Schrumpfsitz bereitgestellt. Das Schrumpffutter umfasst:
einen ersten Abschnitt zur Aufnahme des Werkzeugs, wobei der erste Abschnitt dazu geeignet ist, in einem erwärmten Zustand ein Werkzeug aufzunehmen und in einem kühleren Zustand das Werkzeug zu spannen, und
einen zweiten Abschnitt, der zur Kupplung an eine Motorspindel einer Bearbeitungsmaschine geeignet ist.

Erfindungsgemäß ist der erste Abschnitt zumindest bereichsweise mit einer ersten Schicht und der zweite Abschnitt zumindest bereichsweise mit einer zweiten Schicht beschichtet, wobei die erste Schicht eine thermisch leitende Schicht ist und die zweite Schicht eine thermisch leitende Schicht ist, und wobei eine Wärmeleitfähigkeit der ersten Schicht unterschiedlich ist zu einer Wärmeleitfähigkeit einer zweiten Schicht.
Dabei kann die komplette Oberfläche des ersten Abschnitts mit der ersten Schicht bedeckt sein. Alternativ oder zusätzlich kann dabei auch die komplette Oberfläche des zweiten Abschnitts mit der zweiten Schicht bedeckt sein.

In einer ersten Ausführungsform umfasst das Schrumpffutter den ersten Abschnitt zur Aufnahme des Werkzeugs und den zweiten Abschnitt, wobei zumindest bereichsweise die Oberfläche des ersten Abschnitts und/oder die Oberfläche des zweiten Abschnitts mit der ersten Schicht beschichtet ist.

Das Schrumpffutter umfasst einen ersten Abschnitt, der auch als Schrumpfabschnitt bezeichnet werden kann, der das Werkzeug aufnimmt und einspannt sowie einen zweiten Abschnitt. Der zweite Abschnitt dient z.B. dazu, um das Schrumpffutter mit einer Motorspindel lösbar zu verbinden, damit das Schrumpffutter angetrieben werden kann. Eine Beschichtung eines oder mehrerer Abschnitte, deren Oberfläche vollständig oder zumindest bereichsweise beschichtet werden kann, führt zu einem Schutz der beschichteten Bereiche. Der Schutz umfasst auch einen Schutz vor einer zu schnellen bzw. punktuellen Erwärmung während des Einsetzens bzw. Entnehmens des Werkzeugs aus dem Schrumpffutter. Die Beschichtung führt daher zu einer großflächigeren Erwärmung bzw. Abkühlung, wodurch ein sich verziehen des Schrumpffutters vermindert bzw. weitgehend verhindert werden kann. Die hervorragende Rundlaufkonstanz eines Schrumpffutters kann daher trotz mehrmaligen Erhitzens und Abkühlens aufgrund z.B. notwendiger Umrüstvorgänge erhalten werden. Ferner kann durch eine Beschichtung das Entstehen von Anlauffarben verhindert werden. Außerdem kann die Beschichtung dem Korrosionsschutz dienen.

Gemäß einer beispielhaften Ausführungsform der Erfindung wird ein Schrumpffutter zur Verfügung gestellt, wobei der zweite Abschnitt einen Unterabschnitt zum automatischen Werkzeugwechsel umfasst.

Der Unterabschnitt zum automatischen Werkzeugwechsel umfasst bei einem Hohlschaftkegel eine Greif- und eine Indexiernut. Hierdurch kann ein Handling z.B. durch einen Handhabungsroboter ermöglicht werden.

Das Anordnen unterschiedlicher Schichten (unterschiedlich z.B. bezüglich Schichtdicke, Aufbau der Schicht und/oder Materialsorte der Schicht) auf dem Schrumpffutter z.B. je nach Nähe zur Erwärmungsquelle beim Erwärmungsvorgang bzw. je nach Nähe zur Kühleinheit beim Abkühlungsvorgang, kann zu einer noch gleichmäßigeren Erwärmung bzw. Abkühlung des Schrumpffutters führen. Es kann z.B. eine Schicht mit geringerer Wärmeleitfähigkeit an den Stellen des Schrumpffutters aufgebracht werden, die durch die Wirbelströme direkt erhitzt werden und eine Schicht mit höherer Wärmeleitfähigkeit kann weiter entfernt davon auf das Schrumpffutter angeordnet werden. Hierdurch kann der Einfluss der unterschiedlichen räumlichen Distanz zur Wärmequelle ausgeglichen werden, wodurch ein sich verziehen des Schrumpffutters noch effizienter vermieden bzw. verringert werden kann.

Das Aufbringen einer identischen bzw. homogenen Schicht auf das Schrumpffutter bedeutet eine Vereinfachung des Herstellungsprozesses des Schrumpffutters.

In einer weiteren erfindungsgemäßen Ausführungsform wird ein Schrumpffutter zur Verfügung gestellt, wobei die erste Schicht durch ein PVD- oder ein CVD-Verfahren herstellbar ist.

Gemäß einem weiteren Ausführungsbeispiel der vorliegenden Erfindung wird ein Schrumpffutter zur Verfügung gestellt, wobei die zweite Schicht durch ein PVD- oder ein CVD-Verfahren herstellbar ist.

Gemäß einer beispielhaften Ausführungsform der Erfindung wird ein Schrumpffutter zur Verfügung gestellt, wobei der zweite Abschnitt einen Hohlschaftkegel oder einen Steilkegel umfasst.

In einer weiteren erfindungsgemäßen Ausführungsform wird ein Schrumpffutter zur Verfügung gestellt, wobei die komplette Oberfläche des ersten Abschnitts mit einer ersten Schicht bedeckt ist.

Gemäß einem weiteren Ausführungsbeispiel der vorliegenden Erfindung wird ein Schrumpffutter zur Verfügung gestellt, wobei die komplette Oberfläche des zweiten Abschnitts mit einer zweiten Schicht bedeckt ist.

Das Beschichten der jeweiligen kompletten Oberfläche führt zu einem gleichmäßigen Schutz des betreffenden Abschnitts gegenüber Erwärmung, wodurch die thermische Belastung des Materials des Schrumpffutters gleichmäßig verteilt wird.

Gemäß einer beispielhaften Ausführungsform der Erfindung wird ein Schrumpffutter zur Verfügung gestellt, wobei die erste Schicht und/oder die zweite Schicht eine Titannitrid(TiN)-Schicht, eine Titancarbonitrid(TiCN)-Schicht, eine Titanaluminiumnitrid(TiAlN)-Schicht, eine Chromnitrid(CrN)-Schicht, eine Chromvanadiumnitrid(CrVN)-Schicht oder eine Chromaluminiumnitrid(CrAIN)-Schicht ist.

Als eine Idee der Erfindung kann angesehen werden, ein Schrumpffutter zumindest teilweise mit einer Beschichtung zu versehen, um eine langsamere und damit gleichmäßigere bzw. großflächigere Erwärmung bzw. Abkühlung während des Einsetzens bzw. Entnehmens des Werkzeugs in bzw. aus dem Schrumpffutter sicher zu stellen. Hierdurch wird ein sich verziehen des Schrumpffutters aufgrund eines steilen Temperaturgefälles verhindert bzw. vermindert.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
Fig. 1 ein Schrumpffutter mit eingespanntem Werkzeug in perspektivischer Darstellung,
Fig. 2 ein weiteres Schrumpffutter in perspektivischer Darstellung,
Fig. 3 ein weiteres Schrumpffutter in einer Seitenansicht,
Fig. 4 eine Vorrichtung zur Erwärmung eines Schrumpffutters in perspektivischer Darstellung,
Fig. 5 eine Vorrichtung zur Abkühlung eines Schrumpffutters in perspektivischer Darstellung.

### DETAILLIERTE BESCHREIBUNG BEISPIELHAFTER AUSFÜHRUNGSFORMEN

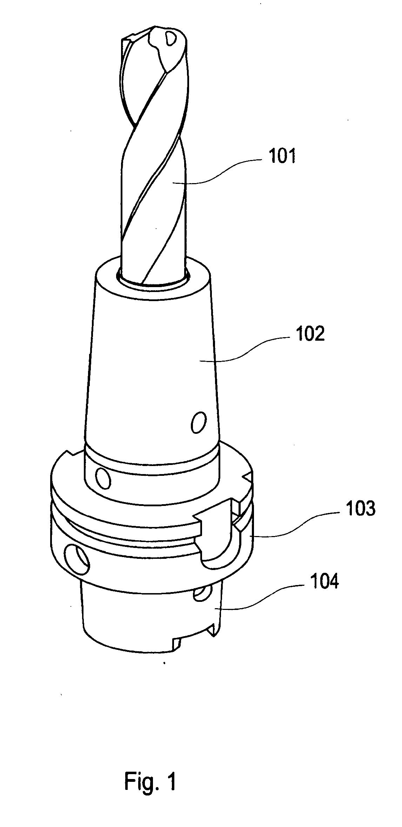

Fig. 1 zeigt ein Schrumpffutter in perspektivischer Darstellung mit einem eingespannten Werkzeug 101 (als eingespanntes Werkzeug 101 ist ein Bohrer dargestellt, es kann aber auch ein sonstiges Werkzeug, wie z.B. Fräser, Reibahle, etc. im Schrumpffutter eingespannt werden). Das Schrumpffutter umfasst den Schrumpfabschnitt 102 zum Spannen des Werkzeugs 101 im Schrumpfsitz und den Abschnitt 104 mit einem Hohlschaftkegel zur Kupplung an eine Motorspindel einer Bearbeitungsmaschine und mit einem Unterabschnitt 103 zum automatischen Werkzeugwechsel mit Greif- und Indexiernut. Der Schrumpfabschnitt 102 kann durch eine Spule induktiv erhitzt werden. Bei diesem Vorgang werden im Schrumpfabschnitt 102 kurzgeschlossene Wirbelströme erzeugt, die zur Erwärmung des Schrumpfabschnitts 102 führen. Im erwärmten aufgeweiteten Zustand des Schrumpfabschnitts 102 kann das Werkzeug 101 eingesetzt werden. Durch einen Abkühlungsvorgang zieht sich der Schrumpfabschnitt 102 des Schrumpffutters zusammen und spannt das eingesetzte Werkzeug 101 ein. Das Schrumpffutter kann teilweise oder komplett beschichtet werden, wobei z.B. eine Beschichtung nach einem PVD-Verfahren durchgeführt werden kann, wodurch z.B. eine Titannitrid(TiN)-Beschichtung, eine Titancarbonitrid(TiCN)-Beschichtung, eine Titanaluminiumnitrid(TiAlN)-Beschichtung, eine Chromnitrid(CrN)-Beschichtung, eine Chromvanadiumnitrid(CrVN)-Beschichtung oder eine Chromaluminiumnitrid(CrAIN)-Beschichtung auf dem Schrumpffutter erzeugt werden kann. Ebenfalls möglich ist die Beschichtung mit einem CVD-Verfahren. Ein Schrumpffutter mit einem beschichteten Schrumpfabschnitt 102 und mit einem beschichteten Abschnitt 103 bzw. mit einem beschichteten Abschnitt 104 weist den Vorteil der erhöhten Korrosionsbeständigkeit dieser Abschnitte 102, 103 und/oder 104 auf. Ferner können während des Erhitzungs- und des Abkühlungsprozesses sich ansonsten ergebende Anlassfarben vermieden werden. Die Beschichtung führt außerdem dazu, dass eine Erwärmung langsamer und daher gleichmäßiger erfolgt, wodurch eine eher punktuelle Erhitzung vermieden wird. Aufgrund der gleichmäßigen und großflächigen Erwärmung ist das Schrumpffutter keinen großen thermischen Belastungen ausgesetzt bzw. die einzelnen Abschnitte des Schrumpffutters gleichmäßigen thermischen Belastungen ausgesetzt, wodurch ein sich verziehen des Schrumpffutters verhindert bzw. verringert werden kann. Ein Verziehen des Schrumpffutters könnte zu einer Verminderung der Rundlaufkonstanz führen.

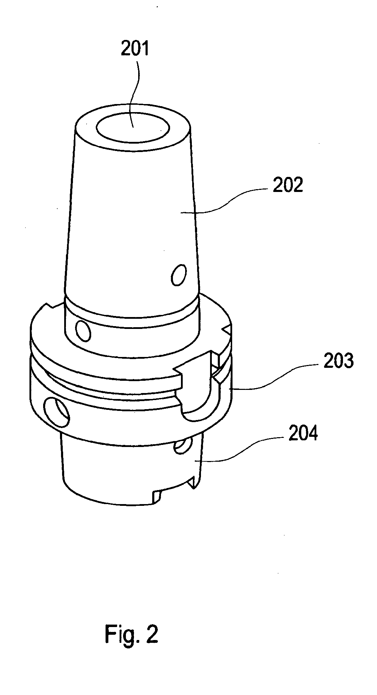

Fig. 2 zeigt ein Schrumpffutter mit einer Ausnehmung 201 zum Einsetzen eines Werkzeugs. Das Schrumpffutter weist einen Schrumpfabschnitt 202, einen Abschnitt 203 zum automatischen Werkzeugwechsel mit Greif- und Indexiernut und einen Abschnitt 204 zur Kupplung an eine Motorspindel einer Bearbeitungsmaschine auf. Der Schrumpfabschnitt 202, der zum Spannen eines Werkzeugs dient, kann beschichtet sein, um eine gleichmäßige und großräumige Erwärmung des Schrumpfabschnitts 202 sicher zu stellen. Durch die großräumige Erwärmung des Schrumpfabschnitts 202 werden die thermischen Belastungen des Materials aufgrund punktuellen Erhitzens vermieden, was ein Beibehalten der Rundlaufkonstanz auch nach wiederholten Erhitzungs- und Abkühlungsvorgängen des Schrumpfabschnitts 202 sicherstellen kann.

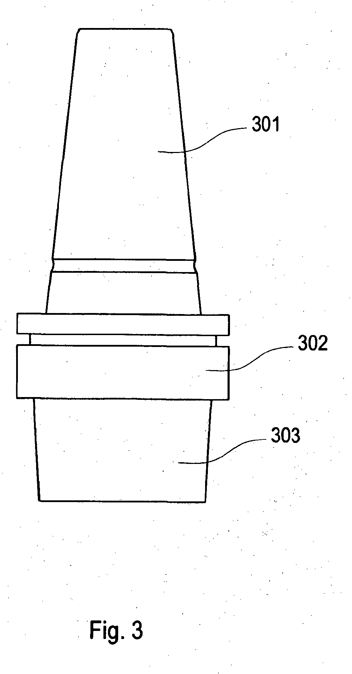

Fig. 3 zeigt ein Schrumpffutter in einer Seitenansicht mit einem Schrumpfabschnitt 301, einem Abschnitt 302 zum automatischen Werkzeugwechsel mit Greif- und Indexiernut und einen Abschnitt 303 zur Kupplung an eine Motorspindel einer Bearbeitungsmaschine. In einer erfindungsgemäßen Ausführungsform kann die Beschichtung durch ein PVD-oder ein CVD-Verfahren erzeugt werden. Der Beschichtungsvorgang kann zu einer Titannitrid(TiN)-Schicht, einer Titancarbonitrid(TiCN)-Schicht, einer Titanaluminiumnitrid(TiAlN)-Schicht, einer Chromnitrid(CrN)-Schicht, einer Chromvanadiumnitrid(CrVN)-Schicht oder einer Chromaluminiumnitrid(CrAlN)-Schicht auf den betreffenden Abschnitten 301, 302 und/oder 303 führen.

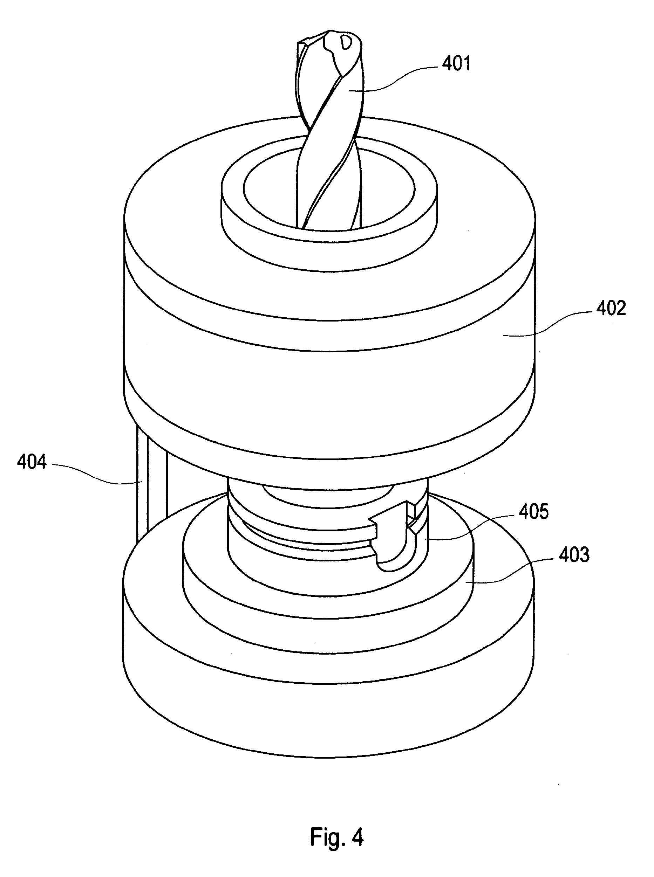

Fig. 4 zeigt eine Vorrichtung zur Erhitzung eines Schrumpffutters 405. Die Vorrichtung umfasst eine Spulenanordnung 402 zur Erzeugung von Wirbelströmen im Schrumpfabschnitt. Der Halter 404 dient zur Anordnung der Spulenanordnung 402 in Höhe des Schrumpfabschnitts. Nach ausreichender Erhitzung des Schrumpfabschnitts kann ein Werkzeug 401, z.B. ein Bohrer, ein Fräser, eine Reibahle, etc., in den Schrumpfabschnitt eingesetzt werden. Die Vorrichtung zur Erhitzung umfasst ferner eine Aufnahme 403 zur Aufnahme des Schrumpffutters während des Erwärmungsvorgangs.

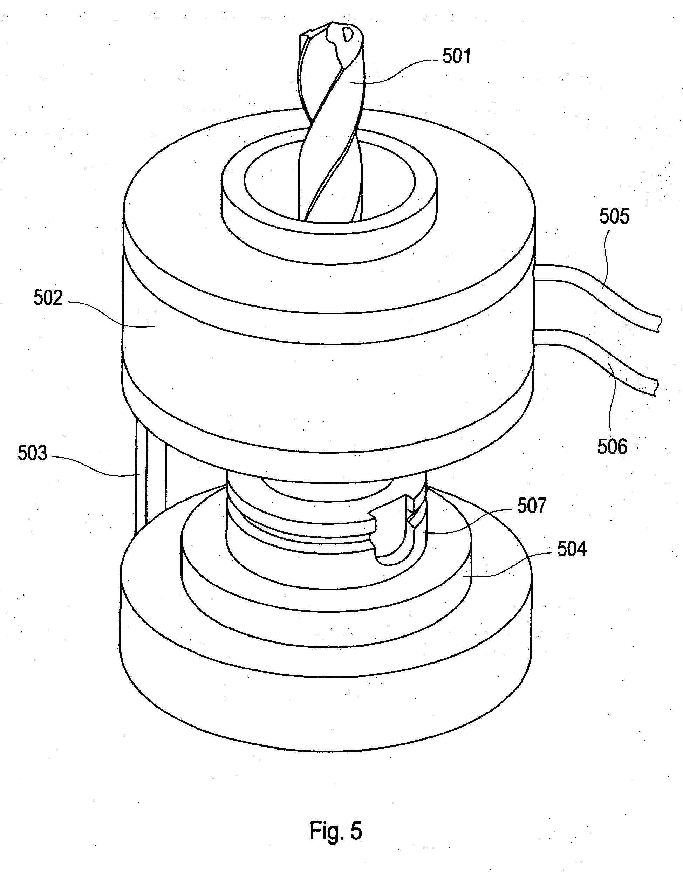

Fig. 5 zeigt eine Vorrichtung zur Abkühlung eines Schrumpffutters 507. Die Vorrichtung weist eine Kühleinheit 502 auf, die zur Abkühlung des Schrumpfabschnitts des Schrumpffutters führt, wobei die Kühleinheit 502 an Leitungen 505, 506 angeschlossen sind, die kalte Fluide, z.B. Kühlwasser, in die Kühleinheit 502 fördern und erwärmte Fluide, z.B. erwärmtes Kühlwasser, aus der Kühleinheit 502 ableiten. Der Halter 503 dient zur Anordnung der Kühleinheit 502 in Höhe des Schrumpfabschnitts. Die Vorrichtung zur Abkühlung weist ferner eine Aufnahme 504 zur Aufnahme des Schrumpffutters während des Abkühlungsvorgangs auf.

### LISTE DER BEZUGSZEICHEN

- 101: Werkzeug
- 102: Schrumpfabschnitt
- 103: Abschnitt zum automatischen Werkzeugwechsel mit Greif- und Indexiernut
- 104: Abschnitt zur Kupplung an eine Motorspindel einer Bearbeitungsmaschine
- 201: Ausnehmung zur Aufnahme eines Werkzeugs
- 202: Schrumpfabschnitt
- 203: Abschnitt zum automatischen Werkzeugwechsel mit Greif- und Indexiernut
- 204: Abschnitt zur Kupplung an eine Motorspindel einer Bearbeitungsmaschine
- 301: Schrumpfabschnitt
- 302: Abschnitt zum automatischen Werkzeugwechsel mit Greif- und Indexiernut
- 303: Abschnitt zur Kupplung an eine Motorspindel einer Bearbeitungsmaschine
- 401: Werkzeug
- 402: Spulenanordnung
- 403: Aufnahme
- 404: Halter
- 405: Schrumpffutter
- 501: Werkzeug
- 502: Kühleinheit
- 503: Halter
- 504: Aufnahme
- 505: Leitung Fluid
- 506: Leitung Fluid
- 507: Schrumpffutter

## Patentansprüche

1. Schrumpffutter zum Spannen eines Werkzeugs im Schrumpfsitz, wobei das Schrumpffutter umfasst:
einen ersten Abschnitt (102) zur Aufnahme des Werkzeugs, wobei der erste Abschnitt (102) dazu geeignet ist, in einem erwärmten Zustand ein Werkzeug aufzunehmen und in einem kühleren Zustand das Werkzeug zu spannen, und
einen zweiten Abschnitt (103, 104), wobei der zweite Abschnitt (103, 104) zur Kupplung an eine Motorspindel einer Bearbeitungsmaschine geeignet ist, wobei
der erste Abschnitt (102) zumindest bereichsweise mit einer ersten Schicht beschichtet ist und dass
der zweite Abschnitt (103, 104) zumindest bereichsweise mit einer zweiten Schicht beschichtet ist,
**dadurch gekennzeichnet, dass**
die erste Schicht eine thermisch leitende Schicht und die zweite Schicht eine thermisch leitende Schicht ist, und
eine Wärmeleitfähigkeit der ersten Schicht unterschiedlich ist von einer Wärmeleitfähigkeit der zweiten Schicht, sodass eine gleichmäßige Erwärmung des Schrumpffutters bei Erwärmung des ersten Abschnitts (102) sichergestellt ist.

2. Schrumpffutter nach Anspruch 1, wobei die komplette Oberfläche des ersten Abschnitts (102) mit der ersten Schicht bedeckt ist.

3. Schrumpffutter nach Anspruch 1 oder 2, wobei die komplette Oberfläche des zweiten Abschnitts (103, 104) mit der zweiten Schicht bedeckt ist.

4. Schrumpffutter nach einem der vorhergehenden Ansprüche, wobei die erste Schicht durch ein PVD- oder ein CVD-Verfahren herstellbar ist.

5. Schrumpffutter nach einem der vorhergehenden Ansprüche, wobei die zweite Schicht durch ein PVD- oder ein CVD-Verfahren herstellbar ist.

6. Schrumpffutter nach einem der vorhergehenden Ansprüche, wobei der zweite Abschnitt (103, 104) einen Hohlschaftkegel oder einen Steilkegel umfasst.

7. Schrumpffutter nach einem der vorhergehenden Ansprüche, wobei der zweite Abschnitt (103, 104) einen Unterabschnitt (103) zum automatischen Werkzeugwechsel umfasst.

8. Schrumpffutter nach einem der vorhergehenden Ansprüche, wobei die erste Schicht und/oder die zweite Schicht eine Titannitrid(TiN)-Schicht, eine Titancarbonitrid(TiCN)-Schicht, eine Titanaluminiumnitrid(TiAlN)-Schicht, eine Chromnitrid(CrN)-Schicht, eine Chromvanadiumnitrid(CrVN)-Schicht oder eine Chromaluminiumnitrid(CrAlN)-Schicht ist.

## Claims

1. Shrink-fit chuck for clamping a tool in shrink fit, whereby the shrink-fit chuck includes:
the first segment (102) for receiving the tool, whereby the first segment (102) is adapted to receive the tool in a heated state and to clamp the tool under cooler conditions and
a second segment (103,104), whereby the second segment (103,104) is used for the coupling suited for the machine tool's motorized spindle, whereby
the first segment (102) is at least partially covered with a first layer, while the second segment (103, 104) is at least partially coated by a second layer, with the following features:
the first layer is thermally conductive, as is the second layer, and
the thermal conductivity of the first layer differs from the second layer's thermal conductivity ability, so that a uniform heating of the shrink fit chuck is ensured in the first segment (102).

2. Shrink-fit chuck according to Claim 1, whereby the entire surface of the first segment (102) is coated within the first layer.

3. Shrink-fit chuck according to Claim 1 or Claim 2, whereby the second segment's (103,104) entire surface is covered by the second layer.

4. Shrink-fit chuck according to the preceding claims, whereby the first layer of the shrink-fit chuck can be produced with a PVD or a CVD method.

5. Shrink-fit chuck according to the preceding claims, whereby the first layer of the shrink-fit chuck can be produced with a PVD or a CVD.

6. Shrink-fit chuck according to the preceding claims, whereby the second segment (103,104) includes a steep taper or a shank taper.

7. Shrink-fit chuck according to the preceding claims, whereby the shrink-fit chuck's second segment (103,104) utilizes a subsection (103) for automatic tool changes.

8. Shrink-fit chuck according to the preceding claims, whereby the first and/or second layer is either a titanium nitride (TiN) layer, a titanium carbon nitride (TiCN) layer, a titanium aluminum nitride (TiAIN) layer, a chromium nitride (CrN) layer, a chrome vanadium nitride (CrVN) layer or a chrome aluminum nitride (CrAIN) layer.

## Revendications

1. Mandrin de frettage pour serrer des outils par dans un corps de mandrin où le mandrin de frettage comprend :
une première section (102) pour recevoir l'outil, où la première section (102) est conçue pour recevoir l'outil à l'état chaud et le serrer à l'état froid et
une deuxième section (103, 104), où la deuxième section (103, 104) est conçue pour le
couplage à une broche de moteur d'une machine-outil où
au moins une partie de la première section (102) est recouverte d'une première couche
et au moins une partie de la deuxième section (103, 104) est recouverte d'une deuxième couche avec les caractéristiques suivantes :
la première couche est un conducteur thermique et la deuxième également;
la conductivité thermique de la première couche diffère de celle de la deuxième couche, ce qui permet un réchauffement homogène du mandrin de frettage lors du réchauffement de la première section (102).

2. Mandrin de frettage selon la revendication 1, où toute la surface de la première section (102) est couverte par la première couche.

3. Mandrin de frettage selon les revendications 1 ou 2, où toute la surface de la deuxième section (103, 104) est couverte par la deuxième couche.

4. Mandrin de frettage selon une des revendications précédentes, où la première couche peut être produite par PVD ou CVD.

5. Mandrin de frettage selon une des revendications précédentes, où la deuxième couche peut être produite par PVD ou CVD.

6. Mandrin de frettage selon une des revendications précédentes, où la deuxième section (103, 104) comprend un cône creux ou un cône fort.

7. Mandrin de frettage selon une des revendications précédentes, où la deuxième section (103, 104) comprend une sous-partie (103) pour le changement automatique d'outil.

8. Mandrin de frettage selon une des revendications précédentes, où la première couche et/ou la deuxième couche est une couche de nitrure de titane (TiN), une couche de carbonitrure de titane (TiCN), une couche de nitrure de titane aluminium (TiAIN), une couche de nitrure de chrome (CrN), une couche de nitrure de vanadium et de chrome (CrVN) ou une couche de nitrure d'aluminium chrome (CrAIN).
